# FASCICULE DE BREVET EUROPEEN

(11) **EP 3 120 445 B1**
(45) Date de publication et mention de la délivrance du brevet: **12.08.2020**
(21) Numéro de dépôt: 15711159.2
(22) Date de dépôt: 19.03.2015
(51) Int. Cl.: H02K 37/18, H02K 21/12, H02K 41/03, H02K 37/04

(54) **MACHINE ELECTRIQUE HYBRIDE**
HYBRIDELEKTRISCHEMASCHINE
HYBRID ELECTRIC MACHINE

(30) Priorité: 21.03.2014 FR 1452382
(43) Date de publication de la demande: 25.01.2017
(73) Titulaire: MMT SA, 6304 Zug (CH)
(72) Inventeur: HYPPIAS, Arnaud, F-39700 Fraisans (FR); POINCEAU, Hubert, CH-2502 Biel/bienne (CH)
(74) Mandataire: IP Trust
(86) Numéro de dépôt international: PCT/EP2015/055846
(87) Numéro de publication internationale: WO 2015/140266

(56) Documents cités:
- EP-A1- 1 416 619
- WO-A1-2004/107530
- GB-A- 2 052 175
- US-A- 4 127 802
- US-A- 4 873 462
- US-A1- 2007 267 929
- US-A1- 2008 211 326
- US-A1- 2014 042 851
- US-B1- 6 265 802

## Description

### Domaine de l'invention

L'invention se rapporte au domaine des machines électriques hybrides, c'est-à-dire ayant les caractéristiques d'une machine à aimant permanent et d'une machine à réluctance variable.

Plus particulièrement, l'invention se rapporte à une machine, motrice ou génératrice, dont le principe peut être mis en œuvre pour un mouvement rotatif ou linéaire.

Typiquement, le rotor d'un moteur hybride présente plusieurs dents comme pour un moteur à réluctance variable, mais chaque dent est polarisée comme pour un moteur à aimant permanent.

### Description de l'art antérieur

On connait déjà dans l'état de l'art diverses machines de type hybride.

Par exemple le brevet US4306164 présente un moteur de type pas à pas et homopolaire, c'est-à-dire présentant un flux d'aimant unidirectionnel et selon un seul sens. Dans ce moteur diphasé l'aimant de polarisation est placé au centre de la structure, sur l'ensemble mobile ou l'ensemble fixe. Les deux phases du moteur sont réalisées par deux bobines dont l'axe de bobinage correspond à l'axe de rotation (bobinage dit « global ») et chaque bobine est prolongée, de part et d'autre, par des couronnes dentées reliées par un retour de flux magnétique. Le déphasage entre les dents des différentes phases au stator et rotor permet la viabilité du fonctionnement diphasé. Par le fait que l'aimant se trouve au centre de la structure, les deux phases du moteur sont totalement dépendantes et ne peuvent fonctionner sans la présence de l'autre. De plus, le caractère homopolaire du moteur (le champ magnétique traversant les bobines est toujours orienté dans un seul sens) a pour conséquence de limiter le couple réalisable car le flux magnétique généré par l'aimant circule toujours dans un seul sens autour de chaque bobine de sorte que la variation de flux en fonction de la rotation est intrinsèquement limitée. La circulation du flux de ce type de moteur est transversale.

Par ailleurs, on connait aussi des machines hybrides présentant deux aimants de polarités opposées disposés au rotor comme par exemple dans le brevet US4339679. Ce type de moteur résout le problème cité précédemment en permettant d'inverser le flux magnétique généré par les aimants au travers de chacune des phases, augmentant intrinsèquement le facteur de couple du moteur ou générateur. Pour ce faire, le moteur comporte au rotor deux modules superposés constitués d'aimants prolongés de part et d'autre par des couronnes ferromagnétiques dentées et présente un stator présentant plusieurs pôles ferromagnétiques dentés autour desquels sont enroulées des bobines. Les bobines étant installées selon un axe transverse à l'axe de rotation, le flux magnétique circule de pôle à pôle selon un chemin qui n'est plus exclusivement transversale. Cette topologie présente plusieurs inconvénients.

Tout d'abord, le bobinage de chaque pôle (bobinage dit « concentré ») induit une difficulté de réalisation accrue. Chaque bobine doit être installée autour de chaque pôle. Pour bénéficier de toute l'action de la périphérie du moteur il y a donc nécessairement plusieurs bobines appartenant à chaque phase, multipliant les manipulations. De plus, pour garder un facteur de remplissage et un facteur de forme optimal (afin de diminuer la résistance intrinsèque de chaque bobine), chaque pôle doit être formé, c'est-à-dire présenter une tête de pôle, compliquant encore la réalisation et favorisant aussi la saturation magnétique des pôles qui empêche donc le moteur de garder des caractéristiques intéressantes aux forts courants.

Ce type de moteur présente aussi un autre inconvénient notable. En effet, même si cette topologie permet de répondre à l'inversion du sens du champ magnétique traversant chaque bobine, le fait de présenter plusieurs phases réparties sur la périphérie du moteur, entraine nécessairement que chaque phase ne bénéficie pas de toutes les dents du rotor (la moitié des dents du rotor sont actives pour une phase donnée à une position donnée). Ainsi, pour garder les bénéfices du moteur hybride, ces moteurs sont donc particulièrement intéressants lorsqu'utilisés avec des nombres de dents relativement importants, de l'ordre de 50 dents par couronne dentée au rotor typiquement. Ce nombre de dents élevé, s'il est intéressant pour générer un couple plus généreux, est néanmoins au détriment des fuites magnétiques de dents à dents qui sont plus importantes que dans une machine telle que le brevet US4306164. Ajoutons, de plus, que le couplage entre les phases n'est pas nul, induisant une inductance mutuelle défavorable.

Il est également connu dans l'état de l'art diverse machines de type hybride comme écrit dans les documents suivants :
- US2007/267929 ;
- US2008/211326 ;
- EP1416619 ;
- WO2004/107530 ;
- GB2052175 ;
- US2014/042851 ;
- US6265802 ;
- US4873462 ;
- US4127802.

En général, la machine électrique hybride présente N phases, chaque phase comprenant un premier et un deuxième ensembles mobiles l'un par rapport à l'autre. L'un desdits ensemble est un ensemble aimanté, tandis que l'autre desdits ensembles comprend au moins une bobine.

### Exposé de l'invention

L'objet de l'invention est de proposer une machine hybride améliorée par rapport à l'état de l'art discuté.

La solution proposée, en revendication 1 pour une machine électrique pas à pas linéaire et en revendication 2 pour une machine électrique pas à pas rotative, utilise à la fois un bobinage global indépendant du pas polaire et un nombre d'aimant indépendant du nombre de paires de pôles. Comparée aux structures des machines à flux transverse déjà connues, cette nouvelle topologie présente des performances équivalentes, voire supérieure, mais avec une forte simplification du design et une réduction du volume d'aimant. Le bobinage global et les aimants globaux permettent de réduire le nombre de pièces, réduire les coûts et simplifier le processus d'assemblage.

Lors du fonctionnement de la machine, la bobine crée un champ de sens déterminé par le sens du courant. Les aimants distribuent leur flux à travers la bobine via les dentures de deux des pièces polaires du rotor en phase angulairement. Le rotor s'aligne avec le stator dans une position stable. Un changement de sens du courant permet au rotor de passer dans une nouvelle position stable.

Particulièrement, l'objet principal de l'invention est de proposer une machine hybride permettant de bénéficier des avantages d'une machine à bobinage global et de ceux d'une machine à bobinage concentré.

Un des objets de l'invention est donc de réaliser une machine conservant un facteur de couple important même avec un nombre de dents limité permettant de diminuer les fuites magnétiques et de conserver un facteur de couple important même sous fort courant électrique injecté dans les bobines.

Un autre des objets de l'invention est de réaliser une machine dont les phases électriques sont indépendantes les unes des autres, en constituant des modules indépendants pour chaque phase.

Un autre des objets de l'invention est encore de permettre une réalisation à rotor extérieur ou à rotor intérieur sans changer les différents ensembles formant la machine, en liant solidairement la bobine au premier ensemble portant les aimants ou au deuxième ensemble ne portant pas les aimants.

Enfin, un des objets de l'invention est de permettre la réalisation linéaire ou rotative d'une machine hybride.

Plus particulièrement, l'invention se rapporte à une machine électrique pas à pas linéaire selon un axe de déplacement du type hybride à N phases (N supérieure ou égale à 1), chaque phase comprenant un premier et un deuxième ensembles mobiles l'un par rapport à l'autre, le premier ensemble étant un ensemble aimanté, le premier ensemble ou le deuxième ensemble comprenant au moins une bobine, chacun desdits ensembles présentant chacun une denture constituée d'un nombre de dents également réparties selon plusieurs périodes, caractérisée en ce que
a. le premier ensemble est constitué de deux parties aimantées, comprenant chacune un aimant couplé magnétiquement à deux culasses dentées, les aimants étant polarisés selon une direction perpendiculaire ou parallèle à l'axe de déplacement et de sens opposé l'un à l'autre, les culasses étant empilées le long de la direction de polarisation des aimants, l'une des culasses dentées de l'une desdites parties aimantées étant couplée magnétiquement par une pièce ferromagnétique à l'une desdites culasses dentées de l'autre partie aimantée,
b. le deuxième ensemble comprend au moins deux zones dentées, avec des pas identiques au pas desdites culasses dentées, les dites zones dentées étant couplées magnétiquement par une pièce ferromagnétique,
c. les parties aimantées du premier ensemble sont en vis-à-vis des zone dentées du deuxième ensemble,
   - le deuxième ensemble comprenant lesdites zones dentées et le premier ensemble comprenant lesdites culasses dentées présentent au moins deux dentures en phase, et au moins deux dentures déphasées d'une demi-période selon la direction de déplacement,
   - les dentures des culasses dentées du premier ensemble couplées à un même aimant sont en phase ou déphasées d'une demi-période, et les dentures du deuxième ensemble sont respectivement déphasées d'une demi-période ou en phase selon la direction de déplacement.

L'invention se rapporte à une machine électrique pas à pas rotative autour d'un axe de rotation du type hybride à N phases (N supérieure ou égale à 1), chaque phase comprenant un premier et un deuxième ensemble mobile l'un par rapport à l'autre, le premier ensemble étant un ensemble aimanté, le premier ensemble ou le deuxième ensemble comprenant au moins une bobine, chacun desdits ensembles présentant chacun une denture constituée d'un nombre de dents également réparties selon plusieurs périodes,
- les N modules monophasés de la machine sont coaxiales, empilées dans le sens axial,
- décalées entre eux par un angle électrique de 360°/N, et dont l'alimentation desdits modules est décalées dans le temps respectivement,
caractérisée en ce que
a. le premier ensemble est constitué de deux parties aimantées, comprenant chacune un aimant couplé magnétiquement à deux culasses dentées, lesdites culasses étant dentées dans une direction radiale, les aimants étant polarisés selon une direction parallèle à l'axe de rotation et de sens opposé l'un à l'autre, les culasse sont empilées le long de la direction de polarisation des aimants, l'une des culasses dentées de l'une desdites parties aimantées étant couplée magnétiquement par une pièce ferromagnétique à l'une desdites culasses dentées de l'autre partie aimantée,
b. le deuxième ensemble comprend au moins deux zones dentées situées de part et d'autre de la bobine dans le sens axial, dentées dans une direction radiale, avec des pas identiques au pas desdites culasses dentées, les dites zones dentées étant couplées magnétiquement par une pièce ferromagnétique,
c. chaque partie aimantée du premier ensemble est en vis à-vis, radialement, d'une des zone dentées du deuxième ensemble,
   - le deuxième ensemble comprenant lesdites zones dentées et le premier ensemble comprenant lesdites culasses dentées présentent au moins deux dentures en phase, et au moins deux dentures déphasées d'une demi-période selon la direction de rotation,
   - les dentures des culasses dentées du premier ensemble couplées à un même aimant sont en phase ou déphasées d'une demi-période, et les dentures du deuxième ensemble sont respectivement déphasées d'une demi-période ou en phase selon la direction de rotation.

Dans un mode de réalisation particulier, la bobine est fixe par rapport au premier ensemble et la partie mobile de la machine est constituée par le deuxième ensemble.

Dans un autre mode de réalisation, la bobine est fixe par rapport au deuxième ensemble et la partie mobile de la machine est constituée par le premier ensemble.

Afin de réaliser une machine polyphasées, dans un mode de réalisation particulier, N est strictement supérieur à 1, les N bobines de la machine sont coaxiales et les N phases sont empilées dans le sens axial.

Dans ce cas, il est possible de réaliser la pièce ferromagnétique reliant les différentes zones dentées par une seule et même pièce.

Dans un mode de réalisation particulier, les culasses dentées du premier ensemble couplées à un même aimant présentent un déphasage d'une demi-période, les deux zones dentées du deuxième ensemble présentent un nombre de dents également réparties le long de la direction de déplacement et elles sont en phase.

Afin d'augmenter la compacité de la machine, dans un mode de réalisation alternatif, les zones ou culasses dentées d'au moins un des deux ensembles présentent des extensions locales réduisant la distance entre deux parties dentées d'un même ensemble.

Afin d'optimiser l'utilisation des propriétés physiques des matériaux, dans un mode de réalisation particulier, les zones ou culasses dentées d'au moins un des deux ensembles présentent un corps et une extrémité et l'extrémité est formée dans un matériau ferromagnétique distinct du matériau du corps.

### Description des figures

L'invention sera mieux comprise à la lecture de la description qui suit, faisant référence aux dessins annexés où :
La figure 1 représente une vue en coupe et en perspective d'une phase de la machine électrique selon un premier mode de réalisation.
Les figures 2a et 2b représentent une vue en coupe et en perspective d'une phase de la machine électrique selon un deuxième mode de réalisation.
La figure 3 représente une vue en coupe et en perspective d'une phase de la machine électrique selon un troisième mode de réalisation.
Les figures 4a et 4b représentent une vue en coupe du deuxième ensemble d'une structure polyphasée axiale selon l'invention.
La figure 5 représente une vue en perspective du deuxième ensemble d'une phase de la machine électrique selon un quatrième mode de réalisation.
La figure 6 représente une vue en perspective d'une structure polyphasée reprenant le mode de réalisation de la figure 5.
La figure 7 représente une vue en coupe et en perspective du deuxième ensemble d'une phase de la machine électrique selon un cinquième mode de réalisation.
Les figures 8a et 8b représentent une vue en coupe partielle et en perspective d'une phase.
La figure 9 représente un graphique montrant l'évolution du couple en fonction de la puissance d'une machine hybride de l'art antérieur et d'une machine selon l'invention à taille identique.
La figure 10 représente une vue en perspective de la machine électrique selon un sixième mode de réalisation.
La figure 11 représente une vue en perspective de la machine électrique selon un septième mode de réalisation.

### DESCRIPTION DETAILLEE D'UN MODE DE REALISATION

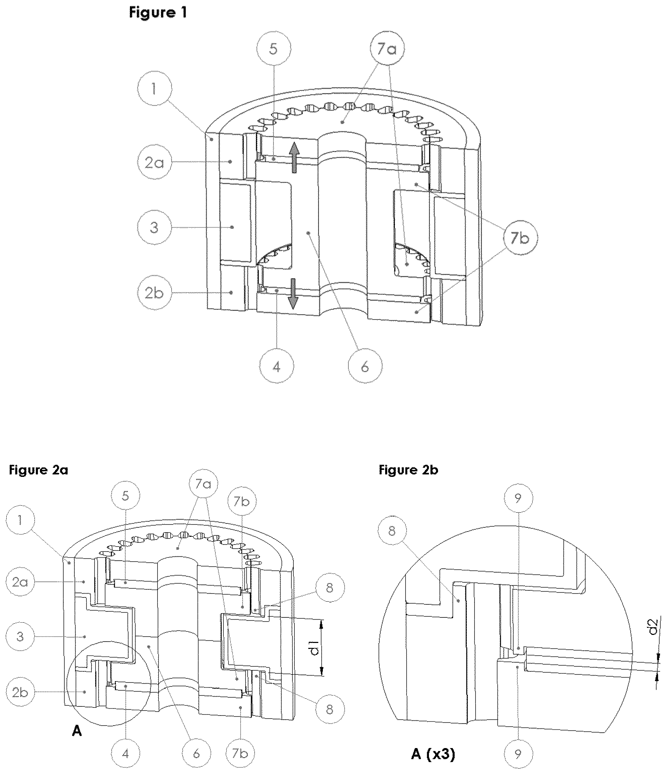

Une des solutions proposées pour réaliser une phase de la machine électrique est représentée sur la figure 1.

Chaque phase comporte une bobine électrique (3) et deux ensembles ferromagnétiques mobiles l'un par rapport à l'autre.

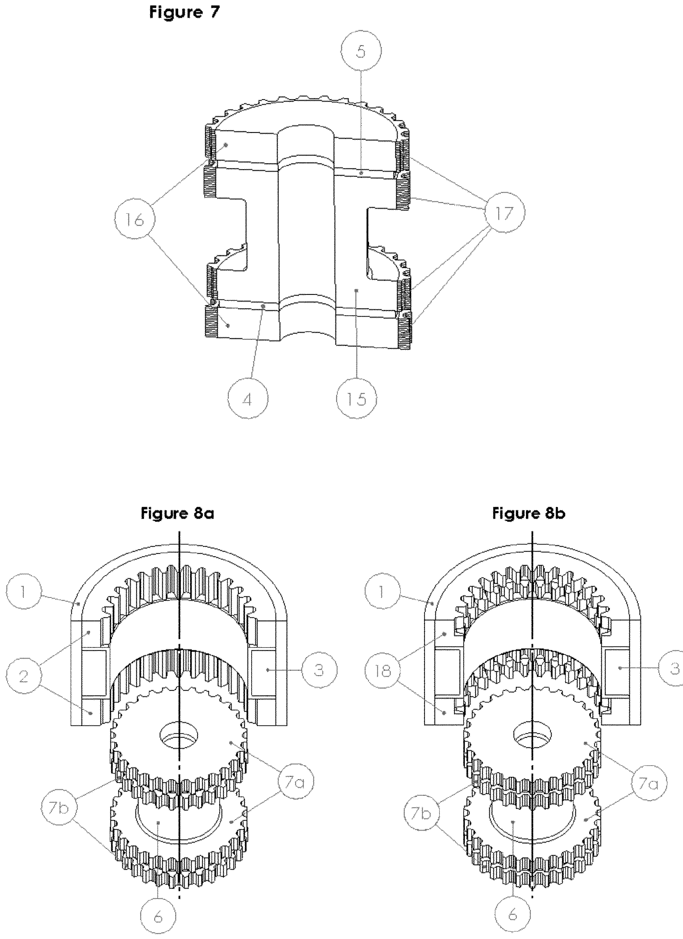

Le premier ensemble comprend deux jeux de pièces composés chacun d'un aimant (4 et 5) et d'une première (7a) et deuxième culasses dentées (7b). Chaque jeu est en vis-à-vis, radialement, d'une des zones dentées (2a, 2b) du deuxième ensemble. Ces deux jeux de pièces sont couplés magnétiquement par une pièce ferromagnétique (6) . Les aimants de chacun de ces jeux, aimantés axialement, sont de polarités opposées, comme l'illustre les flèches figurant sur la figure 1. Les culasses dentées (7a et 7b) forment des paires de pôles une fois polarisées par l'aimant. L'espacement des dents uniformément réparties définit le pas polaire. Le nombre de paires de pôles est indépendant du nombre d'aimants, mais fonction de la denture et du pas polaire. Pour créer l'alternance de pôles magnétiques permettant la rotation da la machine, les deux culasses dentées (7a et 7b) d'un même jeu présentent un déphasage angulaire d'une demi-période. Ainsi les quatre culasses dentées (7) constituant le premier ensemble sont en phase angulairement deux à deux, une dans chaque jeux (7a), et décalées d'une demi période par rapport aux deux autres (7b). On peut notamment apprécier les déphasages en figure 8a qui reprend cette même configuration.

Le deuxième ensemble présente une troisième et quatrième parties ferromagnétiques sous la forme de deux zones dentées (2a et 2b) situées de part et d'autre de la bobine (3) et reliées par une pièce ferromagnétique (1). Le flux magnétique produit par la bobine circulaire (3) circule donc à travers les zones dentées (2a et 2b). Ces zones dentées (2a et 2b) définissent, par l'espacement des dents uniformément réparties, le pas polaire. Dans la configuration illustrée ici, les dentures de ces pièces polaires sont en phase angulairement. Comme pour le premier ensemble, le nombre de pôles créé est fonction de la denture et du pas polaire, mais indépendant du nombre de bobine.

La figure 2a montre les zones dentées du deuxième ensemble (2) présentant des extensions locales, appelées « têtes de pôles » (8) réduisant la distance (d1) entre les deux zones dentées (2a, 2b) . Les culasses du premier ensemble (7) présentent également des têtes de pôles (9) réduisant la distance (d2) entre elles, comme visible en figure 2b représentant une vue de détail de la figure 2a. La bobine (3) s'étend dans la cavité du premier ensemble de manière à occuper tout l'espace disponible.

Ces figures 2 montrent qu'afin d'augmenter le couple et/ou réduire l'encombrement de la machine, les pôles du premier ensemble (9) et/ou du deuxième ensemble (8) peuvent êtres localement étendus, augmentant ainsi la longueur active caractérisée par la hauteur des dentures. De plus, pour augmenter le volume de cuivre, il est possible d'étendre la bobine (3) à l'intérieur de la cavité formée au niveau de la pièce ferromagnétique du premier ensemble. Dans la configuration des figures 2a et 2b, le rayon moyen de l'entrefer est compris entre le diamètre intérieur et le diamètre extérieur de la bobine, démontrant la grande compacité en diamètre possible avec cette réalisation.

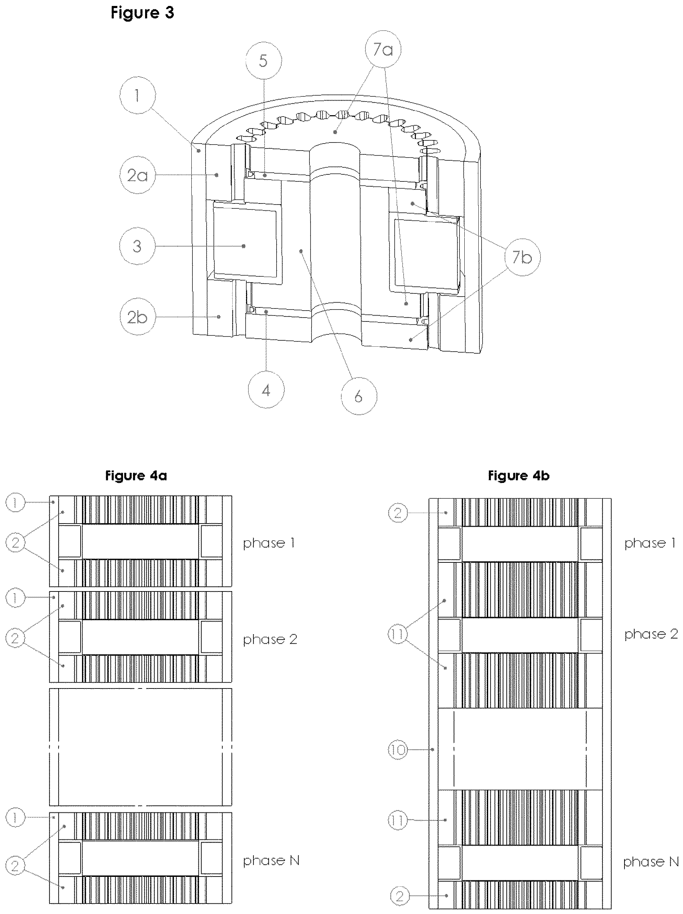

Sur la figure 3, la bobine (3) est solidaire du premier ensemble. Le rotor de la machine est constitué par le deuxième ensemble non aimanté. La bobine (3) peut aisément être disposée sur l'ensemble portant les aimants. La structure ainsi constituée présente les mêmes avantages que celle décrite précédemment. Dans le cas d'une machine à rotor extérieur, cette configuration permet de simplifier encore la construction du rotor qui se retrouve seulement constitué des zones dentées (2) reliées par une pièce ferromagnétique (1).

Sur la figure 4a, on peut voir le principe de réalisation d'un moteur polyphasé selon l'invention où chaque phase représente un module indépendant. Les différentes modules sont placés les uns au-dessus des autres. Le deuxième ensemble de chaque phase est constitué de deux zones ferromagnétiques dentées (2) situées de part et d'autre de la bobine (3) et reliées par une pièce ferromagnétique (1) propre à chaque phase. Sur la figure 4b, la pièce ferromagnétique des N phases est mise en commun et constitue une pièce unique (10). De la même manière, la zone dentée inférieure d'une phase est mise en commun avec la zone dentée supérieure de la phase adjacente pour former une pièce unique (11).

Les figures 4a et 4b illustrent ainsi deux manières différentes de construire une structure axiale polyphasée. La figure 4a montre des phases complétement indépendantes qui sont juxtaposées les unes aux autres. La figure 4b montre que certains composants peuvent être mis en commun afin de réduire le nombre de pièces. Les différentes pièces ferromagnétiques peuvent être rassemblées en une pièce unique (10). Les zones dentées adjacentes de deux phases consécutives peuvent être reliées pour ne former qu'une pièce (11).

L'alimentation d'un bobinage global par un courant alternatif crée un champ pulsant, et non un champ tournant puisqu'on ne dispose que d'une phase par module. Un champ pulsant peut se décomposer en deux champs tournants monophasés d'amplitudes égales mais de sens de rotation opposés. Le rotor est donc libre d'accrocher la composante directe ou la composante inverse du champ. Pour contrôler ce sens de rotation, on associe plusieurs modules monophasés, décalés entre eux dans l'espace et dont l'alimentation est décalée dans le temps, pour supprimer une des deux composantes, et créer un champ tournant.

Ce principe d'empilement de modules d'une machine à flux transverse se généralise à tous les moteurs polyphasés, en particulier diphasés et triphasés pour lesquels on assurera des déphasages respectifs de 90° et 120° électriques entre modules (au stator ou au rotor) et dans l'alimentation des phases.

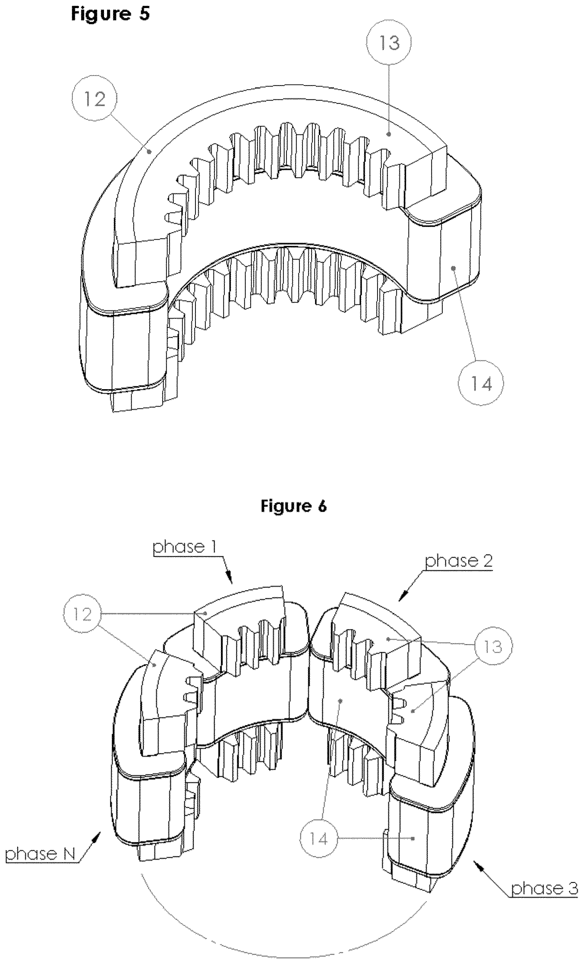

La figure 5 représente le deuxième ensemble de la machine électrique selon l'invention dans une configuration dédiée à la construction d'une structure polyphasée radiale. Ce deuxième ensemble présente deux zones ferromagnétiques dentées (13) situées de part et d'autre de la bobine (14) et reliées par une pièce ferromagnétique (12).

La bobine est alors installée de manière à enserrer ladite pièce ferromagnétique.

Bien que l'invention soit particulièrement intéressante et mise en valeur dans les modes de réalisation décrits précédemment, il est possible de décliner l'invention suivant d'autres topologies. La figure 6 illustre la construction d'une structure polyphasée radiale utilisant plusieurs modules du type décrit en figure 5. Les N phases sont installées dans un même plan et décalées entre elles dans l'espace. La configuration radiale permet ainsi de réaliser une configuration plus compacte en hauteur au détriment des performances en regard d'une configuration axiale ayant un encombrement axial plus important.

La figure 7 montre un des ensembles de la machine réalisé à l'aide de deux matériaux ferromagnétiques différents et agencés de manière à tirer le meilleur parti des caractéristiques de chacun d'eux. Les corps (15 et 16) sont réalisés dans un premier matériau ferromagnétique et les extrémités dentées (17) sont réalisées dans un deuxième matériau ferromagnétique et installées autour et solidaires des corps (15 et 16).

Ainsi, le corps de cet ensemble peut être réalisé à l'aide de poudre frittée (15 et 16) dans le but de favoriser la circulation du flux en 3D et minimiser les pertes fer. Les extrémités dentées (17) sont quant à elles réalisées grâce à des empilements de tôles afin d'augmenter le champ à saturation dans la denture. Selon les besoins, les matériaux magnétiques utilisés peuvent êtres des tôles et paquets de tôles, des pièces découpées et embouties, des pièces massives ou des pièces frittées, ainsi que toute combinaison de ces éléments.

Les figures 8 illustrent les positionnements angulaires différents que peuvent prendre les culasses et zones dentées. Concernant la figure 8a, les deux culasses (7a et 7b) de chaque jeu de culasses dentées du premier ensemble présentent un déphasage angulaire d'une demi-période, les deux zones dentées du deuxième ensemble (2) sont en phase angulairement. Concernant la figure 8b, les deux culasses (7a et 7b) de chaque jeu de culasses dentées du premier ensemble sont en phase angulairement. Chaque zone dentée du deuxième ensemble (18) est subdivisée en deux parties, chacune en vis-à-vis d'une culasse dentée (7) du premier ensemble, qui présentent un déphasage angulaire d'une demi-période entre elles.

Comme expliqué précédemment, la structure décrite ici nécessite la création d'une alternance de pôles permettant la rotation de la machine. Dans ce but, les pièces dentées de l'un des ensembles doivent être en phase angulairement deux à deux et décalées d'une demi période par rapport aux deux autres. Les pièces dentées de l'autre ensemble sont en phase angulairement.

Selon les besoins, le décalage peut se faire soit au niveau des pièces du premier ensemble (7), figure 8a, soit au niveau des pièces du deuxième ensemble (18), figure 8b.

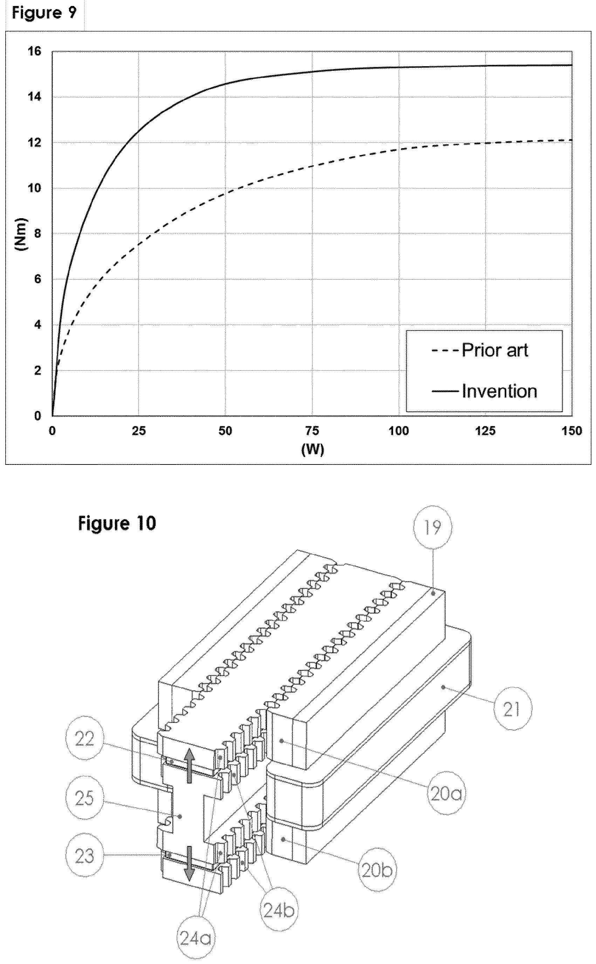

La figure 9 illustre le couple (exprimé en Newton-mètre Nm) en fonction de la puissance (exprimée en Watt W) d'une machine telle que décrite ici en comparaison d'une machine de l'art antérieur. La machine de l'art antérieur est un moteur hybride diphasé à rotor intérieur de diamètre 80mm et dont la longueur utile est de 110mm. Ce moteur comporte 8 bobinages concentrés et compte 50 paires de pôles.

La machine selon l'invention à rotor intérieur comporte également 2 phases et s'inscrit dans le même encombrement. Ces 2 phases sont associées comme décrit sur la figure 4a.

Le stator est réalisé tel qu'illustré sur la figure 2. La pièce ferromagnétique (1) est réalisée à l'aide de poudre frittée. Les zones dentées (2) sont réalisées grâce à des empilements de tôles. Elles présentent des têtes de pôles (8) augmentant leur longueur active. Ainsi, la hauteur dite active représente environ 60% de la hauteur totale de la phase considérée.

Le rotor est réalisé comme illustré sur la figure 7. La partie centrale (15 et 16) est réalisée à l'aide de poudre frittée. Les culasses dentées (17) sont quant à elles réalisées grâce à des empilements de tôles.

Le moteur ainsi constitué compte 30 paires de pôles. La largeur angulaire des dents représente environ 27% du pas polaire.

Le graphique de la figure 9 montre qu'en ce qui concerne le couple statique, la structure selon l'invention offre des performances supérieures à la machine de l'art intérieur à iso-encombrement. La constante moteur, image de la pente à l'origine des courbes, est multipliée par 4. Le couple maximum augmente quant à lui d'environ 22%.

Sur la figure 10, on peut voir le principe de réalisation d'un moteur linéaire diphasé selon l'invention. Cette configuration est directement dérivée de la structure rotative. Le deuxième ensemble comporte deux phases placées de part et d'autre de la partie mobile. Chaque phase est constituée de deux zones ferromagnétiques dentées (20a et 20b) situées de part et d'autre de la bobine (21) et reliées par une pièce ferromagnétique (19), la bobine est installée de manière à enserrer ladite pièce ferromagnétique.

Le premier ensemble comprend deux parties composées chacune d'un aimant (22 et 23) et de deux culasses ferromagnétiques dentées (24a et 24b). Ces parties, reliés par une pièce ferromagnétique (25), sont en vis-à-vis des zones dentées du deuxième ensemble (20). Les aimants de chacun de ces ensembles sont de polarités opposées, comme l'illustre les flèches figurant sur la figure 10.

Sur cet exemple de construction diphasé, le déphasage de 90° électriques entre phases et assuré par le décalage des dentures portées par le premier ensemble.

Par rapport à la phase à laquelle elles font face, les dentures des deux culasses dentées (24a et 24b) d'un même ensemble présentent un déphasage angulaire d'une demi-période, les dentures des quatre culasses (24) sont en phase angulairement deux à deux, une dans chaque ensemble (24a), et décalées d'une demi période par rapport aux deux autres (24b).

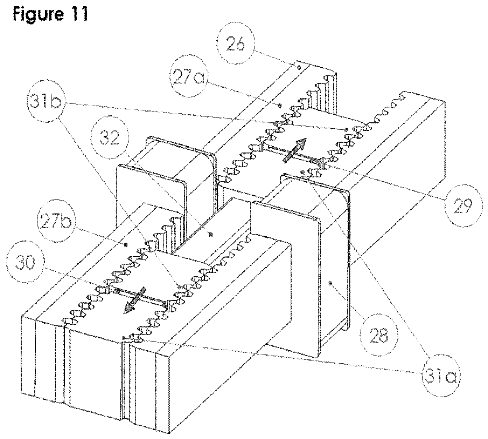

La figure 11 illustre un autre mode de réalisation d'un moteur linéaire diphasé, extrapolé de la structure présentée sur la figure 10. Un intérêt particulier de cette configuration est qu'elle rend possible la réalisation des pièces ferromagnétiques grâce à des empilements de tôles, l'orientation des chemins de flux étant compatible avec ce mode de réalisation. La fabrication d'une telle structure s'en trouve grandement simplifiée.

Comme pour la structure de la figure 10, le deuxième ensemble comporte deux phases placées de part et d'autre de la partie mobile. Chaque phase est constituée de deux zones dentées (27a et 27b) situées de part et d'autre de la bobine (28) et reliées par une pièce ferromagnétique (26). Le déphasage électrique entre phases et assuré par le décalage des dentures portées par le premier ensemble. Le premier ensemble, pour sa part, comprend deux aimants (29 et 30) de polarités opposées, comme illustré sur la figure 11, quatre culasses ferromagnétiques dentées (31a et 31b) et une pièce ferromagnétique (32). Ces pièces sont agencées en deux ensembles composés chacun d'un aimant (29 et 30) et de deux culasses dentées (31a et 31b) reliés par la pièce ferromagnétique (32). Ces ensembles sont en vis-à-vis des zones dentées (27a et 27b) du deuxième ensemble. Par rapport à la phase considérée, les dentures des deux culasses dentées (31a et 31b) d'un même ensemble présentent un déphasage angulaire d'une demi-période, les dentures des quatre culasses (31) sont en phase angulairement deux à deux, une dans chaque ensemble (31a), et décalées d'une demi période par rapport aux deux autres (31b).

La présente invention ne se limite pas aux quelques exemples décrits ci-dessus et pourra s'envisager dans d'autres variantes sans s'écarter de l'objet de l'invention.

Les applications particulièrement visées par l'invention sont, de manière non limitative:
- la motorisation de volets ou stores occultant pour lesquels il peut être envisagé de rendre le deuxième ensemble extérieur et mobile lié ou accroché au volet ou store.
- dans la même configuration : le convoyage, ou les rouleaux d'entrainement.
- L'entrainement des roues de véhicules (par exemple bicyclette) en prise directe ou par contact de type galet.

## Revendications

1. Machine électrique pas à pas linéaire selon un axe de déplacement du type hybride à N phases (N supérieur ou égal à 1), chaque phase comprenant un premier et un deuxième ensembles mobiles l'un par rapport à l'autre, le premier ensemble étant un ensemble aimanté, le premier ensemble ou le deuxième ensemble comprenant au moins une bobine (21, 28), chacun desdits ensembles présentant chacun une denture constituée d'un nombre de dents également réparties selon plusieurs périodes, **caractérisée en ce que**
a. le premier ensemble est constitué de deux parties aimantées, comprenant chacune un aimant (22, 23, 29, 30) couplé magnétiquement à deux culasses dentées (24a, 24b, 31a, 31b), les aimants étant polarisés selon une direction perpendiculaire ou parallèle à l'axe de déplacement et de sens opposé l'un à l'autre, les culasses étant empilées le long de la direction de polarisation des aimants, l'une des culasses dentées (24a, 31a) de l'une desdites parties aimantées étant couplée magnétiquement par une pièce ferromagnétique (25, 32) à l'une desdites culasses dentées (24b, 31b) de l'autre partie aimantée,
b. le deuxième ensemble comprend au moins deux zones dentées (20a, 20b, 27a, 27b), avec des pas identiques au pas desdites culasses dentées (24a, 24b, 31a, 31b), les dites zones dentées (20a, 20b, 27a, 27b) étant couplées magnétiquement par une pièce ferromagnétique (19, 26),
c. les parties aimantées du premier ensemble sont en vis-à-vis des zone dentées du deuxième ensemble,
le deuxième ensemble comprenant lesdites zones dentées (20a, 20b, 27a, 27b) et le premier ensemble comprenant lesdites culasses dentées (24a, 24b, 31a, 31b) présentent au moins deux dentures en phase, et au moins deux dentures déphasées d'une demi-période selon la direction de déplacement,
les dentures des culasses dentées (24a, 24b, 31a, 31b) du premier ensemble couplées à un même aimant (22, 23, 29, 30) sont en phase ou déphasées d'une demi-période, et les dentures du deuxième ensemble sont respectivement déphasées d'une demi-période ou en phase selon la direction de déplacement.

2. Machine électrique pas à pas rotative autour d'un axe de rotation du type hybride à N phases (N supérieur ou égal à 1), chaque phase comprenant un premier et un deuxième ensemble mobile l'un par rapport à l'autre, le premier ensemble étant un ensemble aimanté, le premier ensemble ou le deuxième ensemble comprenant au moins une bobine (3), chacun desdits ensembles présentant chacun une denture constituée d'un nombre de dents également réparties selon plusieurs périodes,
- les N modules monophasés de la machine sont coaxiaux empilés dans le sens axial,
- décalés entre eux par un angle électrique de 360°/N, et dont l'alimentation desdits modules est décalée dans le temps respectivement,
**caractérisée en ce que**
a. le premier ensemble est constitué de deux parties aimantées, comprenant chacune un aimant (4, 5) couplé magnétiquement à deux culasses dentées (7a, 7b), lesdites culasses étant dentées dans une direction radiale, les aimants étant polarisés selon une direction parallèle à l'axe de rotation et de sens opposé l'un à l'autre, les culasse (7a, 7b) sont empilées le long de la direction de polarisation des aimants (4, 5), l'une des culasses dentées (7a) de l'une desdites parties aimantées étant couplée magnétiquement par une pièce ferromagnétique (6) à l'une desdites culasses dentées (7b) de l'autre partie aimantée,
b. le deuxième ensemble comprend au moins deux zones dentées (2a, 2b) situées de part et d'autre de la bobine (3) dans le sens axial, dentées dans une direction radiale (2a, 2b), avec des pas identiques au pas desdites culasses dentées (7a, 7b), les dites zones dentées (2a, 2b) étant couplées magnétiquement par une pièce ferromagnétique (1),
c. chaque partie aimantée du premier ensemble est en vis à-vis, radialement, d'une des zone dentées du deuxième ensemble,
le deuxième ensemble comprenant lesdites zones dentées (2a, 2b) et le premier ensemble comprenant lesdites culasses dentées (7a, 7b) présentent au moins deux dentures en phase, et au moins deux dentures déphasées d'une demi-période selon la direction de rotation, les dentures des culasses dentées (7a, 7b) du premier ensemble couplées à un même aimant (4, 5) sont en phase ou déphasées d'une demi-période, et les dentures du deuxième ensemble sont respectivement déphasées d'une demi-période ou en phase selon la direction de rotation.

3. Machine électrique hybride selon l'une des revendications précédentes **caractérisée en ce que** la bobine (3, 21, 28) est fixe par rapport au premier ensemble et **en ce que** la partie mobile de la machine est constituée par le deuxième ensemble.

4. Machine électrique hybride selon l'une des revendications précédentes **caractérisée en ce que** la bobine (3,21,28) est fixe par rapport au deuxième ensemble et **en ce que** la partie mobile de la machine est constituée par le premier ensemble.

5. Machine électrique hybride selon l'une des revendications précédentes **caractérisée en ce que** N est strictement supérieur à 1, **en ce que** les bobines de la machine sont coaxiales et **en ce que** les N phases sont empilées dans le sens axial.

6. Machine électrique hybride selon l'une des revendications précédentes **caractérisée en ce que** la pièce ferromagnétique (1, 19, 26) reliant les différentes zones dentées (2a, 2b, 20a, 20b, 27a, 27b) du deuxième ensemble est réalisée par une seule et même pièce.

7. Machine électrique hybride selon la revendication 2 ou les revendications 3-6 quand elles dépendant de la revendication 2 **caractérisée en ce que** la zone dentée inférieure (2b) du deuxième ensemble d'une phase est mise en commun avec la zone dentée supérieure (2a) du deuxième ensemble de la phase adjacente pour former une pièce unique (10, 11).

8. Machine électrique hybride selon l'une des revendications précédentes **caractérisée en ce que** les zones (2a, 2b, 20a, 20b, 27a, 27b) ou culasses (7a, 7b, 24a, 24b, 31a, 31b) dentées d'au moins un des deux ensembles présentent des extensions locales réduisant la distance entre deux parties dentées d'un même ensemble.

9. Machine électrique hybride selon la revendication 2 **caractérisée en ce que** les zones (2a, 2b) ou culasses (7a, 7b) dentées d'au moins un des deux ensembles présentent un corps (15, 16) et une extrémité (17) et **en ce que** l'extrémité (17) est formée dans un matériau ferromagnétique distinct du matériau du corps (15, 16).

## Patentansprüche

1. Elektromaschine, schrittweise linear entlang einer Verschiebungsachse, vom Hybridtyp mit N Phasen (N größer oder gleich 1), wobei jede Phase einen ersten und einen zweiten Satz umfasst, die relativ zueinander beweglich sind, wobei der erste Satz ein magnetischer Satz ist, wobei der erste Satz oder der zweite Satz mindestens eine Spule (21, 28) umfasst, wobei jeder der Sätze jeweils eine Verzahnung aufweist, die aus einer Anzahl von Zähnen besteht, die gleichmäßig gemäß mehreren Perioden verteilt sind, **dadurch gekennzeichnet, dass**
a. der erste Satz aus zwei magnetischen Teilen besteht, die jeweils einen Magneten (22, 23, 29, 30) umfassen, der magnetisch mit zwei Zahnjochen (24a, 24b, 31a, 31b) gekoppelt ist, wobei die Magnete in einer Richtung senkrecht oder parallel zur Verschiebungsachse und in entgegengesetzte Richtungen zueinander polarisiert sind, wobei die Joche entlang der Polarisationsrichtung der Magnete gestapelt sind, wobei eines der Zahnjoche (24a, 31a) eines der magnetischen Teile durch einen ferromagnetischen Teil (25, 32) mit einem der Zahnjoche (24b, 31b) des anderen magnetischen Teils magnetisch gekoppelt ist,
b. der zweite Satz mindestens zwei Zahnzonen (20a, 20b, 27a, 27b) mit Teilungen, die zu den Teilungen der Zahnjoche (24a, 24b, 31a, 31b) identisch sind, umfasst, wobei die Zahnzonen (20a, 20b, 27a, 27b) durch einen ferromagnetischen Teil (19, 26) magnetisch gekoppelt sind,
c. die magnetischen Teile des ersten Satzes den Zahnzonen des zweiten Satzes gegenüberliegen, wobei der zweite Satz, der die Zahnzonen (20a, 20b, 27a, 27b) umfasst, und der erste Satz, der die Zahnjoche (24a, 24b, 31a, 31b) umfasst, mindestens zwei Zähne in Phase und mindestens zwei Zähne, die um eine halbe Periode in Verschiebungsrichtung phasenverschoben sind, aufweisen, wobei die Zähne der Zahnjoche (24a, 24b, 31 a, 31 b) des ersten Satzes, die mit demselben Magneten (22, 23, 29, 30) gekoppelt sind, in Phase oder um eine halbe Periode phasenverschoben sind, und die Zähne des zweiten Satzes jeweils um eine halbe Periode phasenverschoben oder in Phase in der Verschiebungsrichtung sind.

2. Elektromaschine, schrittweise drehend um eine Drehachse, vom Hybridtyp mit N Phasen (N größer oder gleich 1), wobei jede Phase einen ersten und einen zweiten Satz umfasst, die relativ zueinander beweglich sind, wobei der erste Satz ein magnetischer Satz ist, wobei der erste Satz oder der zweite Satz mindestens eine Spule (3) umfasst, wobei jeder der Sätze jeweils eine Verzahnung aufweist, die aus einer Anzahl von Zähnen besteht,
die gleichmäßig gemäß mehreren Perioden verteilt sind,
- die N einphasigen Module der Maschine sind in axialer Richtung koaxial gestapelt,
- untereinander um einen Polradwinkel von 360°/N versetzt, und die Stromversorgung der Module ist jeweils zeitlich versetzt, **dadurch gekennzeichnet, dass**
a. der erste Satz aus zwei magnetischen Teilen besteht, die jeweils einen Magneten (4, 5) umfassen, der magnetisch mit zwei Zahnjochen (7a, 7b) gekoppelt ist, wobei die Joche in einer radialen Richtung verzahnt sind, wobei die Magnete in einer Richtung parallel zur Drehachse und in entgegengesetzte Richtungen zueinander polarisiert sind, wobei die Joche (7a, 7b) entlang der Polarisationsrichtung der Magnete (4, 5) gestapelt sind, wobei eines der Zahnjoche (7a) eines der magnetischen Teile durch einen ferromagnetischen Teil (6) mit einem der Zahnjoche (7b) des anderen magnetischen Teils magnetisch gekoppelt ist,
b. der zweite Satz mindestens zwei Zahnzonen (2a, 2b) umfasst, die sich in axialer Richtung beiderseits der Spule (3) befinden und in einer radialen Richtung (2a, 2b) mit Teilungen verzahnt sind, die zu den Teilungen der Zahnjoche (7a, 7b) identisch sind, wobei die Zahnzonen (2a, 2b) durch einen ferromagnetischen Teil (1) magnetisch gekoppelt sind,
c. jeder magnetische Teil des ersten Satzes radial gegenüber einer der Zahnzonen des zweiten Satzes liegt, wobei der zweite Satz, der die Zahnzonen (2a, 2b) umfasst, und der erste Satz, der die Zahnjoche (7a, 7b) umfasst, mindestens zwei Zähne in Phase und mindestens zwei Zähne, die um eine halbe Periode in Drehrichtung phasenverschoben sind, aufweisen, die Zähne der Zahnjoche (7a, 7b) des ersten Satzes, die mit einem selben Magneten (4, 5) gekoppelt sind, in Phase oder um eine halbe Periode phasenverschoben sind, und die Zähne des zweiten Satzes jeweils um eine halbe Periode in Drehrichtung phasenverschoben oder in Phase sind.

3. Hybrid-Elektromaschine nach einem der vorhergehenden Ansprüche, **dadurch gekennzeichnet, dass** die Spule (3, 21, 28) relativ zum ersten Satz fixiert ist und dass der bewegliche Teil der Maschine aus dem zweiten Satz besteht.

4. Hybrid-Elektromaschine nach einem der vorhergehenden Ansprüche, **dadurch gekennzeichnet, dass** die Spule (3, 21, 28) relativ zum zweiten Satz fixiert ist und dass der bewegliche Teil der Maschine aus dem ersten Satz besteht.

5. Hybrid-Elektromaschine nach einem der vorhergehenden Ansprüche, **dadurch gekennzeichnet, dass** N strikt größer als 1 ist, dass die Spulen der Maschine koaxial sind und dass die N Phasen in axialer Richtung gestapelt sind.

6. Hybrid-Elektromaschine nach einem der vorhergehenden Ansprüche, **dadurch gekennzeichnet, dass** der ferromagnetische Teil (1, 19, 26), der die verschiedenen Zahnzonen (2a, 2b, 20a, 20b, 27a, 27b) des zweiten Satzes verbindet, durch ein einziges und selbes Teil gebildet ist.

7. Hybrid-Elektromaschine nach Anspruch 2 oder den Ansprüchen 3-6, wenn diese abhängig von Anspruch 2 sind, **dadurch gekennzeichnet, dass** die untere Zahnzone (2b) des zweiten Satzes einer Phase mit der oberen Zahnzone (2a) des zweiten Satzes der benachbarten Phase gemeinsam ist, um ein einziges Teil (10, 11) zu bilden.

8. Hybrid-Elektromaschine nach einem der vorhergehenden Ansprüche, **dadurch gekennzeichnet, dass** die Zahnzonen (2a, 2b, 20a, 20b, 27a, 27b) oder Zahnjoche (7a, 7b, 24a, 24b, 31a, 31b) mindestens eines der beiden Sätze lokale Verlängerungen aufweisen, die den Abstand zwischen zwei Zahnteilen eines selben Satzes verringern.

9. Hybrid-Elektromaschine nach Anspruch 2, **dadurch gekennzeichnet, dass** die Zahnzonen (2a, 2b) oder Zahnjoche (7a, 7b) von mindestens einem der beiden Sätze einen Körper (15, 16) und ein Ende (17) aufweisen und dass das Ende (17) aus einem ferromagnetischen Material gebildet ist, das vom Material des Körpers (15, 16) verschieden ist.

## Claims

1. Hybrid stepper electrical machine which is linear along an axis of movement, comprising N phases (N being greater than or equal to 1), each phase comprising a first assembly and a second assembly which are movable relative to one another, the first assembly being a magnetic assembly, the first assembly or the second assembly comprising at least one coil (21, 28), each of said assemblies having toothing consisting of a number of teeth which are evenly distributed in a plurality of periods, **characterized in that**
a. the first assembly consists of two magnetized portions, each comprising a magnet (22, 23, 29, 30) magnetically coupled to two toothed yokes (24a, 24b, 31a, 31b), the magnets being polarized in a direction perpendicular or parallel to the axis of movement and in an opposite direction to one another, the yokes being stacked along the direction of polarization of the magnets, one of the toothed yokes (24a, 31a) of one of said magnetized portions being magnetically coupled by a ferromagnetic component (25, 32) to one of said toothed yokes (24b, 31b) of the other magnetized portion,
b. the second assembly comprises at least two toothed zones (20a, 20b, 27a, 27b), having pitches which are identical to the pitch of said toothed yokes (24a, 24b, 31a, 31b), said toothed zones (20a, 20b, 27a, 27b) being magnetically coupled by a ferromagnetic component (19, 26),
c. the magnetized portions of the first assembly are opposite the toothed zones of the second assembly, the second assembly comprising said toothed zones (20a, 20b, 27a, 27b) and the first assembly comprising said toothed yokes (24a, 24b, 31a, 31b) which have at least two teeth in phase, and at least two teeth out of phase by a half-period in the direction of movement, the teeth of the toothed yokes (24a, 24b, 31a, 31 b) of the first assembly which are coupled to the same magnet (22, 23, 29, 30) are in phase or out of phase by a half-period, and the teeth of the second assembly are out of phase by a half-period or in phase in the direction of movement, respectively.

2. Hybrid stepper electrical machine rotating about an axis of rotation, comprising N phases (N being greater than or equal to 1), each phase comprising a first assembly and a second assembly which are movable relative to one another, the first assembly being a magnetic assembly, the first assembly or the second assembly comprising at least one coil (3), each of said assemblies having toothing consisting of a number of teeth which are evenly distributed in a plurality of periods,
- the N single-phase modules of the machine being coaxially stacked in the axial direction,
- mutually offset by an electrical angle of 360°/N, and the power supply of said modules being offset in time, respectively, **characterized in that**
a. the first assembly consists of two magnetized portions, each comprising a magnet (4, 5) which is magnetically coupled to two toothed yokes (7a, 7b), said yokes being toothed in a radial direction, the magnets being polarized in a direction parallel to the axis of rotation and in an opposite direction to one another, the yokes (7a, 7b) are stacked along the direction of polarization of the magnets (4, 5), one of the toothed yokes (7a) of one of said magnetized portions being magnetically coupled by a ferromagnetic component (6) to one of said toothed yokes (7b) of the other magnetized portion,
b. the second assembly comprises at least two toothed zones (2a, 2b) which are located on either side of the coil (3) in the axial direction, toothed in a radial direction (2a, 2b), and have pitches which are identical to the pitch of said toothed yokes (7a, 7b), said toothed zones (2a, 2b) being magnetically coupled by a ferromagnetic component (1),
c. each magnetized portion of the first assembly is opposite, radially, from one of the toothed zones of the second assembly, the second assembly comprising said toothed zones (2a, 2b) and the first assembly comprising said toothed yokes (7a, 7b) which have at least two teeth in phase, and at least two teeth phase out of phase by a half-period in the direction of rotation, the teeth of the toothed yokes (7a, 7b) of the first assembly which are coupled to the same magnet (4, 5) are in phase or out of phase by a half-period, and the teeth of the second assembly are out of phase by a half-period or in phase in the direction of rotation, respectively.

3. Hybrid electrical machine according to either of the preceding claims, **characterized in that** the coil (3, 21, 28) is fixed relative to the first assembly and **in that** the movable portion of the machine consists of the second assembly.

4. Hybrid electrical machine according to any of the preceding claims, **characterized in that** the coil (3, 21, 28) is fixed relative to the second assembly and **in that** the movable portion of the machine consists of the first assembly.

5. Hybrid electrical machine according to any of the preceding claims, **characterized in that** N is strictly greater than 1, **in that** the coils of the machine are coaxial and **in that** the N phases are stacked in the axial direction.

6. Hybrid electrical machine according to any of the preceding claims, **characterized in that** the ferromagnetic component (1, 19, 26) connecting the different toothed zones (2a, 2b, 20a, 20b, 27a, 27b) of the second assembly is produced by a single component.

7. Hybrid electrical machine according to either claim 2 or claims 3-6 when dependent on claim 2, **characterized in that** the lower toothed zone (2b) of the second assembly of a phase is joined to the upper toothed zone (2a) of the second assembly of the adjacent phase to form a single component (10, 11).

8. Hybrid electrical machine according to any of the preceding claims, **characterized in that** the toothed zones (2a, 2b, 20a, 20b, 27a, 27b) or toothed yokes (7a, 7b, 24a, 24b, 31a, 31 b) of at least one of the two assemblies have local extensions reducing the distance between two toothed portions of the same assembly.

9. Hybrid electrical machine according to claim 2, **characterized in that** the toothed zones (2a, 2b) or toothed yokes (7a, 7b) of at least one of the two assemblies have a body (15, 16) and an end (17) and **in that** the end (17) is formed from a ferromagnetic material which is different from the material of the body (15, 16).
